# EUROPEAN PATENT SPECIFICATION

(11) **EP 1 466 487 B1**
(45) Date of publication and mention of the grant of the patent: **12.05.2010**
(21) Application number: 03701525.2
(22) Date of filing: 17.01.2003
(51) Int. Cl.: H04Q 1/14, H01R 9/24

(54) **TERMINAL BLOCK AND WIRE DISTRIBUTOR INCLUDING AT LEAST ONE TERMINAL BLOCK**
ANSCHLUSSBLOCK UND KABELVERTEILER MIT MINDESTENS EINEM ANSCHLUSSBLOCK
BLOC DE JONCTION ET DISTRIBUTEUR DE FILS COMPRENANT AU MOINS UN BLOC DE JONCTION

(30) Priority: 18.01.2002 DE 20200746 U
(43) Date of publication of application: 13.10.2004
(73) Proprietor: 3M Innovative Properties Company, St. Paul MN 55133-3427 (US)
(72) Inventor: SCHLÜTER, Dietrich, 46284 Dorsten (DE); OTTO, Hans-Dieter, 51688 Wipperfürth (DE); BUND, Christine, 42111 Wuppertal (DE); PFANNKUCHEN, Ralf, 42111 Wuppertal (DE); DENTER, Friedrich, 44575 Castrop-Rauxel (DE)
(74) Representative: HOFFMANN EITLE
(86) International application number: PCT/EP2003/000461
(87) International publication number: WO 2003/061303

(56) References cited:
- EP-A- 0 071 264
- EP-A- 0 524 115
- EP-A- 1 032 102
- WO-A-02/076109
- DE-A- 2 048 144
- FR-A- 2 347 797

## Description

### Field of the Invention

The invention relates to a telecommunications wire distributor including at least one terminal block and wire guides.

### Background

A telecommunications wire distributor flexibly interconnects many leads and cable conductors. A distinction is made between main distributors and sub-distributors. Main distributors are usually found indoors in the telephone company building. Sub-distributors are often accommodated in suitable housings outdoors or in relatively large shelters. Distributors can flexibly interconnect incoming and outgoing cables by means of cross-connects. To ensure an uncluttered arrangement and facilitate wire or cable handling , the incoming and outgoing cable conductors are guided in the wire distributor in defined ways and means. This is briefly explained by way of the following example of a main distributor. However, this explanation is applicable to other wire distributors.

In a main distributor, a plurality of cables leading to the individual subscribers are guided into the wire distributor at the subscriber side. At the so-called "backbone" side of the wire distributor, the cables leading to a PBX (central office exchange operated by the telecommunications company) are terminated. It is desirable to flexibly connect the individual subscriber lines to the individual backbone cables, and for this purpose, cross-connects are provided.

To permit changes to the cross-connects, terminal blocks are used at both the subscriber side and the backbone side. The terminal blocks usually have at least two rows of contacts. The cables leading to the subscribers are terminated, at one end, at the contacts in the first row of the subscriber side terminal block. Cross-connects are terminated at the second row of contacts in the subscriber side terminal block. These cross-connects are terminated, at the other end, at the first row of contacts in the backbone side terminal block. Cables leading to the PBX are terminated, at one end at the second row of contacts in the backbone side terminal block. The cable conductors terminated at a terminal block are also called "incoming" and "outgoing" cable conductors.

In telecommunications systems such as the wire distributor described above, it is usually desirable to guide the incoming and outgoing cable conductors that are terminated at different contact rows of a terminal block to different sides of the terminal block. In a terminal block having horizontal rows of contacts, cable conductors terminated at a lower row of contacts of a terminal block can be routed downwards at a position alongside the terminal block. Correspondingly, the cable conductors terminated at an upper row of contacts are routed upwards and alongside the terminal block. In one type of main distributor, the contact rows of the terminal block are horizontal. A cable in which several cable conductors leading to the PBX or to the system are grouped together (hereinafter referred to as "backbone cable"), can be introduced from below to a terminal block at the backbone side of the main distributor. The cross-connect wiring may be brought out at the top of the backbone side terminal block and routed to the subscriber side of the main distributor.

The cable conductors are then further grouped together into bundles and then lead to other terminal blocks. The fact that the cable conductors are routed along side the terminal blocks, has the consequence that the cable conductors terminated at the horizontal rows of the terminal block, need to be routed to a particular side of the terminal block.

In another type of main distributor, the rows of contacts at the backbone side of the main distributor are provided in a vertical orientation and wire guides are oriented in the vertical direction. The cable conductors on the left-hand side are usually routed towards the bottom of the distributor, and on the right-hand side, towards the top. This is similar to the aforementioned type of a main distributor which has terminal blocks with horizontal rows of contacts arranged in a stacked configuration, wherein both the subscriber as well as backbone terminal blocks are stacked vertically in a sole bay. Also in this case, to permit uncluttered arrangement of the wiring, the backbone or subscriber wiring needs to be brought out at a side other than that of the cross-connect wiring. Typically, the relation between a certain row of contacts and the assigned wire guide is such that the cable conductors terminated at the one row of contacts are brought out to a different defined side than the cable conductors terminated at another row of contacts. To ensure a reliable, uncluttered routing of the individual cores, it is desirable to provide suitable wire guides. For example, at the upper side and lower side of a terminal block, wire routing troughs may be provided that lead the terminated cable cores of different rows of contacts to different sides of the terminal block.

ADSL, asymmetric digital subscriber line, is a broadband communications technology that can move data over regular telephone lines at speeds up to 140 times faster than analog modems. ADSL technology splits the existing twisted-pair telephone lines into two frequency ranges. The frequency range below 4 kHz is reserved for voice service (called POTS - Plain Old Telephone Service). The frequency range above 4 kHz is reserved for high-speed data. This split allows the use of the same line for phone calls (voice signals) and network access (high-speed data) at the same time. The technology is called "asymmetric" because more bandwidth is reserved for receiving data than for sending data. Download speeds can range from 256 Kilobits per second up to 8 Megabits per second and upload speeds can range from 16 to 640 Kilobits per second.

XDSL is used in the present disclosure to refer generically to different versions of DSL technology that transmit combined signals, both data and POTS signals at the same time, over twisted-pair telephone lines. In an XDSL network a line connects an end user to a node. Modems at each end of the line transmit and receive the signals.

Splitters are circuits often located inside the modems. Splitters, such as low and high pass filters, separate the incoming voice signal from the data signal. The voice signals are then routed over the voice network, while the data signals are coupled to the data network. As will readily be appreciated, a node or central office exchange (PBX) servicing several thousands of subscribers has to manage a correspondingly large number of lines coming in and out.

DE 201 04 605 U1 relates to an ADSL terminal block including a splitter. This terminal block is intended to replace existing terminal blocks, when ADSL technology is installed in place of existing (sole) POTS technology. In order to facilitate the intended replacement, certain contacts in both contact rows of the terminal block are reserved for POTS wires. As the POTS wires will always be connected with the POTS contacts of a particular contact row, the POTS contacts of the other rows will not be used. Furthermore, as wire guides leading to different sides, are associated with different contact rows, POTS wires can be guided to either side of the terminal block by connecting the POTS wires with the contacts of a particular row and, furthermore, using the wire guides associated therewith. This feature may enhance the flexibility of the desirable terminal block. However, there will always be several contacts of the terminal block which will not be used, as contacts for connecting POTS wires are reserved in both contact rows and only those of a particular contact row will be used.

DE 31 30 133 C2 relates to a distributor block consisting of connection elements to which cable conductors are terminated, and so-called "wire routing elements". The wire routing elements comprise two arrays of wire routing troughs, the first array leading to one side of the distributor block and the second array to the other side. In a stacked arrangement, the two arrays of wire routing troughs, including different wire routing elements, are each used for a specific connection element and adjoin such element. Accordingly, the terminated cable conductors can be brought out only at a single defined side on either side of the function element.

DE 26 43 186 C2 relates to a similar configuration.

DE 26 43 046 C3 describes an interfacing distributor provided with a wire routing module in which two arrays of wire routing troughs are configured. A first array of wire routing troughs extends from the front side to one side of the module and a second array extends from the rear side of the module to the other side of the module. No wire routing troughs are provided at the second side of the module.

### Summary of the Invention

The invention provides a telecommunications terminal block as described in claim 1 as well as a wire distributor as described in claim 9. Preferred embodiments are derivable from the dependent claims.

The invention provides a telecommunications terminal block with at least one contact module. The contact module has front, rear, upper, and lower sides. Separating the upper and lower sides and extending between the front and back sides, are two side walls. The front, rear, upper and lower sides, together with the side walls, form the outer surface of the contact module as such. In an embodiment, in which the contact module and the wire guide described below are integrated into one housing, the housing can have additional side walls. At least one row of contacts is provided in the contact module and the row extends between the sidewalls. The contacts provided on the front side of the contact module are exposed, and incoming and outgoing cable conductors can be terminated at the contacts. The contacts may be of the IDC, wire-wrap or any other type. The terminal block further comprises at least two arrays of wire guides positioned or mounted on the upper side, the lower side or both the upper and lower sides of the contact module. Within each array of wire guides, all of the guides lead in the same direction, i.e., toward one side wall. However, the wire guides in one array will lead toward a different sidewall than wire guides in another array. The term "lead" in connection with the present invention means that wire guides are capable of and adapted to guide cable conductors to a particular side. This side is referred to as the side, to which the wire guides "lead". At least two arrays of wire guides, the wire guides of which lead to opposite sides, are assigned to said row of contacts. This assignment means that the wire guides of the assigned arrays of wire guides are reserved for those cable conductors, which are terminated at the row of contacts, to which the arrays are assigned. Thus, by means of the described terminal block, plural contact rows have at least two arrays of wire guides, which are assigned to the individual contact row. Therefore, either array of wire guides can be used to lead the cable conductors terminated at the contact row to a particular side. This assignment of at least two arrays of wire guides is, as described in more detail below, derivable from the fact, that, in a stacked or adjacent arrangement of plural terminal blocks, the number of arrays of wire guides is higher than the number of contact rows.

The above-described arrangement of wire guide arrays enables cable conductors terminated at a contact row to be guided toward either side wall. The wire guides can be configured as open or closed wire routing troughs. Furthermore, the wire guides can be formed on a plate-like member comprising at least one plate and a number of webs extending substantially perpendicular therefrom, between which the wire guides are formed. These can be closed by means of an additional plate placed on the tops of the webs.

In one embodiment of the invention, the contact module includes at least two rows of contacts extending between the side walls. As described above, the contacts on the front side are exposed and incoming and outgoing cable conductors can be terminated at the contacts. However, in this embodiment, the terminal block comprises at least three arrays of wire guides which can be mounted or positioned on the upper side or lower side of the contact module.

For flexible guidance of the cable conductors, two arrays of wire guides can be positioned at or mounted on the lower side of the contact module, and, on the upper side of the contact module, there is a further array of wire guides.

Terminal blocks with horizontal rows of contacts in the contact modules is one possible configuration of the terminal block in accordance with the invention. The invention is not limited to such configurations. For example, the row or rows of contacts may just as well extend vertically. However, for the sake of simplicity and illustration, the following description relates to a horizontal orientation of the row of contacts.

Mounted on the contact module at the upper side and/or lower side are the wire guide arrays. The wire guides ensure an expedient and uncluttered arrangement routing of cable conductors to the contacts of the terminal block. Any structure suitable for guiding cable conductors at least punctiform toward one of the side walls of the terminal block will be suitable for use in this invention. Typically, the wire guides can be oriented parallel to the upper side and lower side of the terminal module and are either open or closed, juxtaposed together into an array. In one configuration, the wire guides have a plurality of concentric, approximately quarter-circle or similarly curved, adjacent troughs which can be open or closed. When mounted on the terminal module, such troughs curve from the front side toward a side wall. Closed wire guides with integral top, bottom and sidewalls may be used in the invention. Alternatively, wire guides with open wire routing troughs defined by a bottom and sidewalls and provided with a separate plate-type cover are also useful.

The wire guides can also be formed by a plurality of hook-shaped elements, e.g. a wire routing comb, wherein a wire routing comb is understood to be a row of substantially hook-shaped wire guides.

The wire guides are grouped together into arrays, the wire guides of each array leading to a single side. Such an array of wire guides may be integrated, for example, in a substantially rectangular plate-like component including a juxtaposed arrangement of open or closed troughs. The wire guides of an array may be arranged in a single plane. To separate the wire guides of other arrays from each other, other arrays may be arranged in other planes. It is conceivable to assign each contact of a row of contacts to two wire guides, i.e. one leading to the left-hand side and one leading to the right-hand side. As an alternative, two arrays of wire guides may be arranged in a single plane, in a juxtaposed arrangement. By suitably guiding the cable conductors through each of the wire guides, it is possible (at least for some contacts) to guide the cable conductors either to the left-hand side or right-hand side. It is just as possible, of course, to combine the various configurations and arrangements of wire guides as described in any way as needed.

For the terminal block the flexibility of guiding the cable conductors in this way is substantially enhanced by assigning a single row of contacts to an array of wire guides which lead to different sides of the terminal block. This enables cable conductors terminated at contacts of a single row of contacts to be guided to any side of the terminal block and this provides novel flexibility to the user without sacrificing the ability to maintain a certain order in routing of cable conductors from the terminal block. Hitherto it was conventionally the case, that a certain row of contacts had to be assigned to a particular side of a terminal block. At this side the further run of the cable conductors, as cited above, was defined, for example, downwards or upwards by the defined architecture of the wire distributor. Accordingly, it was hitherto the case that certain rows of contacts could only be used for a certain function, for example, for terminating cable conductors at the subscribers. Other rows of contacts could only be used for terminating cross-connect or backbone cables due to the traditionally defined routing directions of bundled cable conductors.

It is now possible to bring out cable conductors terminated at a particular row of contacts to either side of the terminal block. At the left-hand side and right-hand side of the terminal block the directions for routing the cable conductors are defined, namely upwards or downwards. The invention thus provides added flexibility as to whether a terminated cable conductor can be further routed upwards or to the side at which it is routed further downwards. In particular, the side, to which a terminated cable conductor can be guided, is independent from the contact row, at which it is terminated. By means of the invention, the terminated cable conductor can flexibly be guided towards either side. In this manner it is possible to continue the guiding of the terminated cable conductor along side the terminal block in the upwards or downwards direction without harming the uncluttered arrangement of the cable conductors. The novel terminal block accordingly makes it possible to use the rows of contacts with added flexibility.

The advantages of the invention can be achieved, for example, in a so-called "reversible block". This block has, at its front side, a row of contacts for terminating cable conductors, and at its rear side, a similar row of contacts for terminating cross-connect wires. In such a configuration, a single array of wire guides is basically sufficient; provided two such blocks are stacked, and a sole array of wire guides is located between the row of contacts in each of the blocks. In a conventional arrangement, the cable conductors terminated at the contacts could be brought out only to the side to which the wire guides of the array run.

Now, with the invention, two arrays of wire guides can be assigned to a row of contacts. The wire guides of each array leading to a different side. The cable conductors terminated thereby can, thus, be optionally brought out at either side. This makes the contacts and the terminal block substantially more flexible.

A further embodiment has a contact module with two rows of contacts. At least one row of contacts is assigned to two arrays of wire guides, and each array leads to a different side of the terminal block, substantially adding to the unit's flexibility of use. The second row of contacts , may also be assigned two arrays of wire guides, each leading to a different side. It is, however, just as conceivable to have a single array of wire guides leading to a particular side for either or both rows of contacts. Furthermore, a third array may be provided, for example consisting of "wire guide combs".

The use of closed wire routing troughs, in the invention offers the advantage that cable conductors terminated at the terminal block are well protected in their routing to the sides of the terminal block, providing an uncluttered arrangement and preventing the cable conductors from being released from the contacts accidentally.

When access to a side of a terminal block is difficult after installation, substantially hook-shaped wire guides are sufficient. In this arrangement, the hooks protruding sideways may extend to one, or both, side(s) of a short web that can be attached to the housing of the terminal block, resulting in a mushroom-like attachment web having two hooks protruding sideways from its ends. Arrangement of several such wire guides on one side of the terminal block is a conceivable type of a wire routing comb. It will be appreciated, of course, that wire guides may be provided on all sides of the terminal block in accordance with the invention and they may be open as well as closed. More particularly, the wire guides may have an open trough configuration in one terminal block and the open side can be covered by a directly adjoining terminal block.

The advantages in accordance with the invention are basically available by simply assigning the arrays of wire guides to the terminal block. More particularly, the wire guides may be configured in separate components, so-called wire plates and each may be assigned to a terminal block. Wire guides, which can be wire routing plates, can be integrated in the housing of the terminal block. More particularly, substantially plate or disk-shaped components in which the wire guides are configured can be fixedly attached to the housing of the terminal block, or the housings of the components can be integrated into a common housing. More particularly, it is conceivable to configure the terminal block in accordance with the invention, as a terminal block with wire guides on each side. Configuring the terminal block in accordance with the invention with the wire guides in a dual configuration on at least one side is also possible by attaching a component with a supplementary array of wire guides on one side to an array of wire guides that is already provided there. As the wire guides of the supplementary array of wire guides lead to a different side then the initial wire guides, the flexibility in guiding terminated cable conductors is significantly enhanced.

Furthermore, it is just as conceivable, and may even be preferred in certain applications, to form two arrays of wire guides by producing an adapter, for example by injection molding, with wire guides that are initially open to both sides. These wire guides are then covered on one side by the surface of the terminal block to which the adapter is to be applied, and covered on the other side by a relatively simple plate-shaped component. In conclusion, on this side, as mentioned above, covering is achieved by the surface of an adjoining terminal block.

Special advantages regarding the continued use of popular wire routing modules materialize from the embodiment in which the wire guides of an array located more remotely from the contacts leads to the same side as the wire guides on the opposite side of the terminal block. In other words, the wire guides directly adjoining the terminal block are routed to different sides. In this embodiment, the terminal block of the invention differs in at least one respect from a known terminal block in that on at least one of the two sides of the terminal block, a supplementary array of wire guides is provided leading to the same side as the wire guides located directly adjoining the terminal block at the other side. In this embodiment, the terminal block permits an uncluttered configuration of the system. Adjoining each row of contacts would firstly be two arrays of wire guides leading to different sides. The added flexibility in this embodiment materializes from provision of a further array of wire guides to permit routing of the cable conductors of the contact row also to the other side.

Although the invention offers the cited advantages irrespective of the kind of terminal block involved, a particularly useful embodiment employs a terminal block with at least one splitter module or assembly. The addition of the splitter assembly permits the invention to be used as a splitter block.

When the invention includes a splitter, it permits an advantageous organization of the terminated cable conductors. In this arrangement, a signal coming from the subscribers is substantially routed to a terminal block on the subscriber side and from there to a splitter block at the backbone side, and two cable conductors then lead from the splitter block to each subscriber. One of these cable conductors leads to the PBX system or location, whilst the other cable conductor leads to a digital subscriber line access multiplexer (DSLAM) where the high bit rate signal is processed.

However, a situation may arise in which the conductors leading to the PBX need to be terminated at the same side as those leading to the subscriber side (or cable side). Since the wire guides at the subscriber side lead to a side other than that of the wire guides at the backbone side, the conductors leading to the backbone side would be brought out in such an arrangement at the wrong side, if not for the invention. Because the invention has wire guides present in a dual configuration, one can now route the conductors leading to the backbone side to the other side, i.e. the subscriber side, according to this novel type of guiding the conductors. This permits traditional routing of the conductors outside of the terminal block whilst permitting an uncluttered arrangement of conductors inside the module.

Generally, the dual configuration of the wire guides on at least one of the two sides opens up special advantages in that the conductors leading to the subscribers can now be terminated at one and the same side of the terminal block, when so desired, but brought out to different sides of the terminal block by the wire guides leading to the different sides. It is this aspect, that advantages regarding accepted, standard cable management and in uncluttered arrangement can be achieved.

Although the invention already offers these special advantages, it is preferred within the scope of the invention to equip a wire distributor, more particularly a main distributor with at least one such terminal block to make use of the advantages for the system as a whole. In such an system, it is desirable to have several terminal blocks in a stacked or adjacent arrangement in the wire distributor, and between adjacent or stacked contact modules more arrays of wire guides are provided than rows of contacts in a contact module. This reflects the "doubling" of the wire guides and permits the added flexibility described herein. Also in a single terminal block, the invention can be reflected by the fact that the number of arrays of wire guides provided is higher than the number of rows of contacts.

### Brief Description of the Drawings

The invention will now be detailed by way of an embodiment as shown in the drawings in which:
Fig. 1 is a view in perspective of a partial section of a terminal block in accordance with the invention;
Fig. 2 is an exploded view of an embodiment similar to the embodiment as shown in Fig. 1;
Fig. 3 is a plan view of several terminal blocks in accordance with the embodiment as shown in Fig. 2; and
Fig. 4 is a plan view of several terminal blocks in accordance with a further embodiment of the invention.

### Detailed Description of Embodiments of the Invention

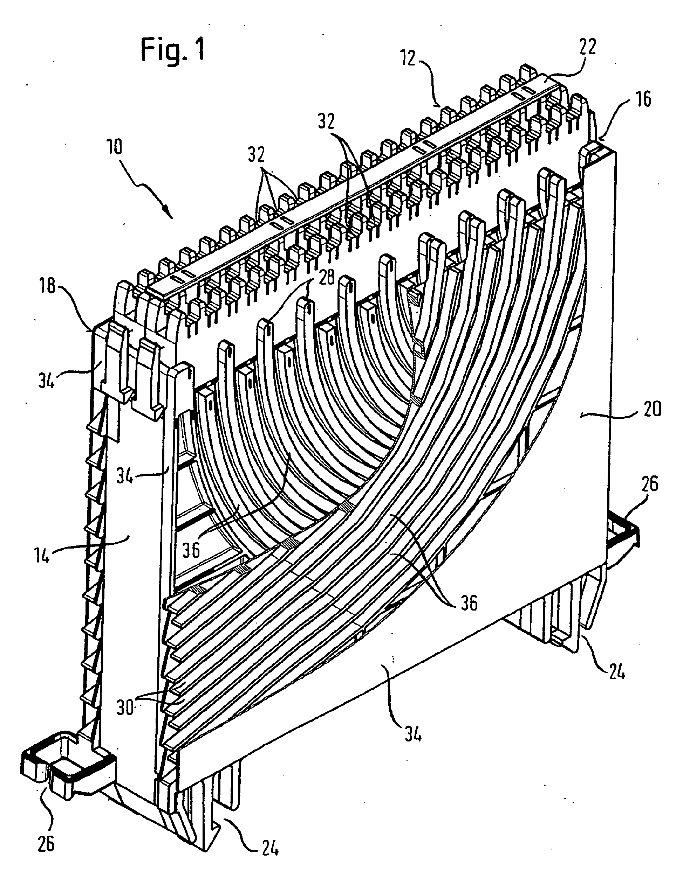

Fig. 1 illustrates a terminal block 10 in accordance with the invention. The terminal block 10 as shown may be provided in a telecommunications wire distributor in which cable conductors are routed from the various sides to the terminal block 10 as shown for terminating there. Wire distributors usually include racks in which several of the terminal blocks 10 as shown can be mounted, stacked or juxtaposed. The cable conductors (not shown) terminated at the terminal block 10 are detailed in the following, starting from the contacts of the terminal block at the side. At the sides of several stacked terminal blocks 10 the cable conductors brought out from the terminal block are combined together with the cable conductors leading to the adjoining terminal blocks to form bundles of cable conductors. These bundles are routed, for example, to the PBX or to further wire distributors which may be located outside of the building.

The terminal block 10 generally includes a front side 12, a rear side 52, a lower side 20, an upper side 18, and two side areas 14 and 16. The front side 12 has a plurality of contacts 32. The upper side 18 includes a first module 34.1. The lower side 20 includes two similar modules 34.2 and 34.3. Each module 34 includes at least one array of wire routing troughs 30. The wire routing troughs 30 form wire guides suitable for guiding the cable conductors terminated at the contacts 32 to the left-hand side 14 or right-hand side 15.

During normal use, the terminal block 10 is oriented such that its front side 12 and the contacts 32 are exposed for terminating cable conductors. The terminal block 10 may be oriented in various ways in a telecommunications wire distributor. In one embodiment, several terminal blocks are attached together by their upper sides 18 and/or lower sides 20 and are trough-mounted. In this manner, a stack of several terminal blocks 10 as shown in Fig. 1 is formed.

When the typical main distributor architecture is used, the terminal block 10 can be trough-mounted and either vertically oriented, i.e. with the rows of contacts 32 extending vertically, or horizontally oriented, i.e. with the rows of contacts 32 extending horizontally. The orientation of the terminal block 10 as a whole and of the individual side surface areas 14, 16 as well as the lower side 20 and the upper side 18 may thus vary. However, based on the orientation as shown in Fig. 1, the relatively narrow face shown on the left is termed the left-hand side surface area 14. The opposite side surface area (not visible in Fig. 1) is termed the right-hand side surface area 16. In accordance with the vertical assembly position of a stack of terminal blocks 10 the side of the terminal block which is hidden in Fig. 1 forms the upper side 18.

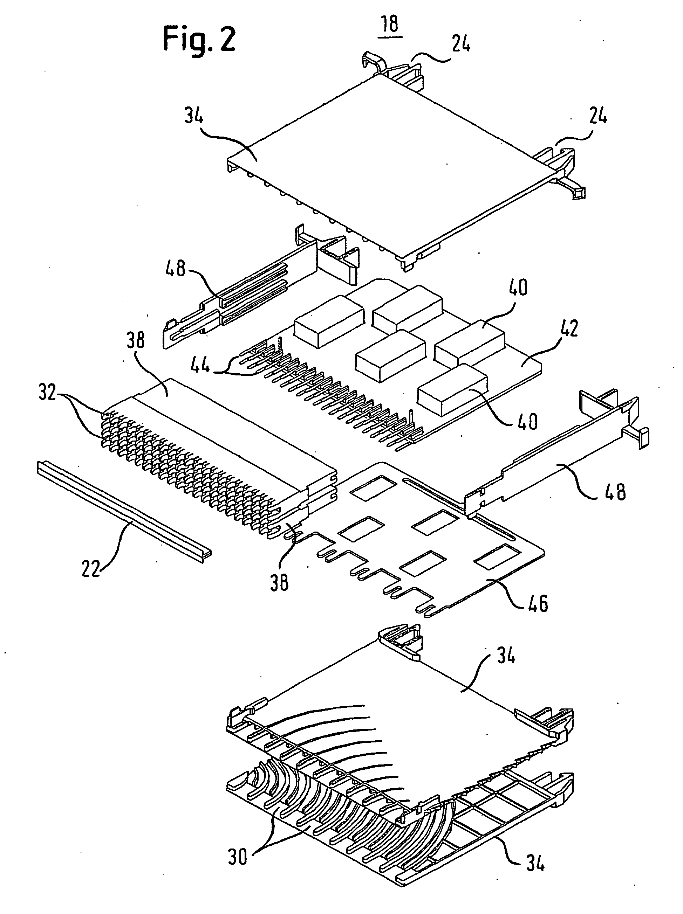

The front side 12 of the terminal block 10 is represented substantially as a dual splitter block having four rows of contacts 32. As outlined below, only two rows of contacts are used. In accordance with the term contact module, as used in the context of the invention, the rows of contacts in use belong to a single contact module. In other words, the dual modules (see also Fig. 2) are to be considered a single contact module. In the present example, the two inner rows of contacts 32 are, however, covered by a suitable plastics strip 22 and are not used. The terminal block 10 includes a housing 54. The housing 54 has a rear portion that is provided with latches 24 for secure trough-mounting. Provided in the interior of the terminal block 10 between the row of contacts 32 at the front side 12 and the rear side 52, is at least one splitter assembly 40. The splitter assembly 40 is usually applied to a circuit board. (see Fig. 2).

In the embodiment shown, the modules 34, in which the wire routing troughs 30 are formed, substantially have the shape of a rectangular plate. The modules 34.1 and 34.2 further have a rear portion which has a routing eyelet 26, 56. The eyelet 26, 56 of each module 34.1 and 34.2 is on an opposite side of the terminal block 10, all conductors of a side left-hand side surface area 14 then being routed through one eyelet 26. The conductors on the right-hand side surface area 16 are routed and bundled through a second eyelet 56. As can be seen in Fig. 1, the lowermost module 34.3 does not include an eyelet in this particular embodiment. Instead, the eyelet 26 of the uppermost module 34.1, the wire guides of which route the conductors to the same side as the wire routing troughs of the lowermost module 34, can be used.

As illustrated in Fig. 1, wire routing troughs 30 are configured on the upper side 18 of the terminal 10 leading from the front side 12 to the left-hand side 14. Thereby, cable conductors (not shown) to be terminated by the upper row of contacts 32 can be routed from the left-hand side 14 to the corresponding contacts 32. The cable troughs 30 are usually designed for porting one pair of conductors. When, for example, ten pairs of contacts are provided at the front side in a row of contacts 32, the wire routing troughs 30 are configured ten in number. The pairs ported thereby are separated directly at the contacts 32 into single conductors. However, the wire routing troughs can also be designed for porting several pairs of conductors.

Contrary thereto, the wire routing modules 34.2 and 34.3, having the shape of a rectangular plate, at the lower side 20 are configured so that they feature twenty wire routing troughs 30. This results in a separate wire routing trough 30 being available for each single conductor. The two wire routing troughs 30 of a contact pair to which the two single conductors of a pair are to be correspondingly terminated, are separated from each other by projections 28 protruding to the front side. The wire routing troughs 30 of the module 34.2 at the lower side 20, which is configured nearer to the contacts 32, lead to the right-hand side 16 of the terminal block 10. Via this side the conductors leading to the subscribers are routed to the contacts 32 of the terminal block 10. As mentioned above, it may be desirable particularly for the splitter blocks to terminate the conductors leading to the PBX, i.e. the plain old telephone system (POTS) conductors, at the same side of the terminal block 10 as the conductors leading to the subscribers.

This remarkably changes the common architecture of wire distributors in which contacts of one row were always used for terminating conductors leading to the subscribers, whereas contacts of a different row were used for the POTS conductors. Now, by means of the invention, the POTS conductors can be brought out at the correct side of the terminal block 10, i.e. the side opposite to that to which the conductors leading to the subscribers are brought out. For this purpose the second wire routing module 34.3 at the lower side 20 is provided. The wire routing troughs 30 of this additional module 34.3 lead to the left-hand side of the terminal block 10. Also in this lowermost module 34.3 the two wire routing troughs 30 belonging to a contact pair are also separated from each other by projections 28 at the front side 12.

It is to be noted that the possibility of bringing out the conductors terminated at the lower row of contacts 32 to either side, as described above, is not restricted to conductors leading to the subscribers, on the one hand, and POTS conductors, on the other. Instead, one and the same row of contacts 32 can be used for terminating both cross-connect wires and conductors leading to the subscribers or POTS conductors. Also in this case, in order to comply with the desired architecture of a wire distributor, connectors having a different purpose should be brought out to different sides. The terminal block 10 can be used advantageously to satisfy this requirement in ensuring reliable and accurate wiring.

In the interior of the wire routing modules 34.2 and 34.3 the separation is provided by webs 36 which adjoin the projections 28 and are configured relatively thick-walled in the case of the upper wire routing module 34.2 located at the lower side 20. The two wire routing troughs 30 of a contact pair are separated from each other at the lower wire routing module 34.3 by thinner walled webs 60. In the example embodiment shown, the wire routing troughs 30 of the upper wire routing module 34.2 are separated from each other throughout by relatively thick webs 36. This configuration may be further simplified to advantage by the upper wire routing module 34.2 directly adjoining the terminal block being open to the lower side, as shown in Fig. 1.

The lower side of the wire routing troughs 30 is covered to a certain extent by the surface of the additional wire routing module 34.3 attached to the lower side. The last-mentioned lower wire routing module 34.3 comprises corresponding wire routing troughs 30 closed to both sides so that in accordance with the orientation as shown in Fig. 1 the lower side 20 of the terminal block is formed by a continuous surface. However, the upper wire routing module 34.2 may also comprise likewise a continuous surface so that to advantage this wire routing module can be put to use unchanged as regards popular terminal blocks.

Accordingly, the additional, lower wire routing module 34.3 would not require a "floor" for the wire routing troughs 30 in contact with the upper wire routing module 34.2. The wire routing troughs 30 are closed off at their upper side by the surface of the upper wire routing module 34.2, whereas at the other, the lower, side the wire routing troughs 30 are closed off by the continuous surface 20 forming the lower side of the terminal block 10 in the orientation as considered.

Otherwise, the wire routing troughs of all wire routing modules 34 are configured to form substantially concentric bends. As shown in Fig. 1, a wire routing trough of the lowermost module 34.3, and located at the outermost right-hand edge, ends as the rearmost wire routing trough at the left-hand side 14 of the terminal block 10. It is to be noted that the housing 54 in general, as well as the wire routing modules 34, which can be integrated with the housing 54, are preferably made of a plastics material. Furthermore, these components can be produced by injection molding. At the front side 12, the wire routing troughs 30 can preferably have a (tangential) direction which is substantially parallel to the front-to-rear direction. At the left-hand side 14 and right-hand side 16, the wire routing troughs 30 can extend in a direction slightly inclined with regard to the left-right direction. This inclination preferably extends somewhat to the rear side. This facilitates further routing of the conductors towards the eyelets 26, 56.

Referring now to Fig. 2 there is illustrated a terminal block 110 in accordance with the invention in an exploded view in perspective configured in accordance with a preferred embodiment as a so-called splitter block. Provided at the front side 12 of the terminal block 110, the same as in the embodiment as shown in Fig. 1, are firstly four rows of contacts 32 in two splitter modules 38. The uppermost and lowermost row of contacts 32 are considered outer rows of contacts 32. Rows of contacts adjacent to each other are referred to as inner rows of contacts. The two inner rows of contacts are covered by a suitable plastic strip 22 and are not in use. However, it is to be understood that the aforementioned splitter modules 38 belong to a single contact module as such term can be understood in the context of this disclosure. As outlined below, at least one row of contacts of the contact module, making use of two splitter modules, is provided with dual arrays of wire guides. Splitter assemblies 40 in the form of suitable filters are applied to a circuit board 42 and are connected to the contacts 32 of the terminal block 110 via suitable tracks and by means of contacts 44 provided on the circuit board. The contacts 32 of the terminal block are suitably connected to the splitter assemblies 40 so that, for example, the communicated signal can be separated into a POTS signal and a data signal.

As illustrated in Fig. 2 the terminal block 110 furthermore includes in the interior a grounding plate 46. In the example embodiment as shown, a housing 54 of the terminal block is formed, for one thing, by the rectangular plate-shaped wire routing modules 34 as already shown in Fig. 1 and, for another, by side parts 48, a left-hand side part 48.1 and a right-hand side part 48.2. For the left-hand side part 48.1 suitable retaining contours for locating the components in the interior of the terminal block may be provided. For example, by suitable latching means the wire routing modules 34 may be combined with the side parts 48 to configure a housing 54 closed off on all sides with latching means 24 for securing the terminal block to a rack-mounting system (not shown). In the embodiment shown, the eyelets 26, 56 (Fig. 1) are made up of a first portion 26.1, 56.1. which is each formed integrally with the uppermost module 34.1, on the one hand. On the other, the side parts 48 include further portions 26.2 and 56.2 of the eyelets. These portions cooperate in forming eyelets similar to the eyelets 26, 56 which are shown in Fig. 1. However, in the embodiment as shown in Fig. 1 the entire eyelets 26, 56 are formed on the module 34.1 and 34.2 respectively. It is to be noted that a configuration including a wire routing module 34.1 at the upper side 18 and a wire routing module 34.2 at the lower side 20 corresponds to the conventional configuration of a terminal block featuring on each side an array of wire guides 30 leading to different sides.

The terminal block 110 includes a third wire routing module 34.3 provided additionally at the lower side 20. The wire routing troughs 30 of this additional wire routing module 34.3 lead to the side, namely the left-hand side as shown in Fig. 2, other than that of the wire routing troughs 30 of the wire routing module 34.2 arranged thereabove.

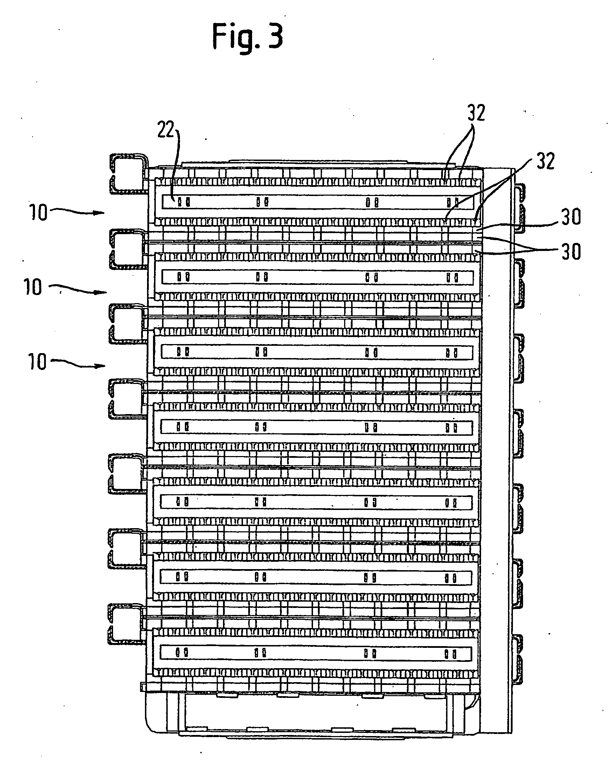

Referring now to Fig. 3 there is illustrated, how in an arrangement of several terminal blocks 10 or 110 juxtaposed, three arrays of wire routing troughs 30 are provided in each case between the terminal blocks in a stacked arrangement. The wire routing troughs 30 of each module 34.1, 34.2 and 34.3 form an array of wire routing troughs, adapted to guide the conductors to a single side. The number of three arrays of wire routing troughs 30 is thus higher than the number of two rows of contacts 32 provided at each terminal block 10 or 110. Rows of contacts in this context are understood to be the rows of contacts which are actually in use. In other words, the number of rows of contacts is not formed additionally by the two inner rows of contacts (cf. Fig. 2) which are covered by the plastic strip 22. Instead, in the terminal block 10 or 110 only two rows of contacts 32 are in use. As cited above, these two rows of contacts 32 merely necessitate two arrays of wire guides, i.e. one on each side, the upper side 18 and lower side 20, of the terminal block 10 or 110. In accordance with the invention, however, two arrays of wire routing troughs 30 are provided at one side, i.e. on the lower side in accordance with the embodiment as shown. Therefore, the cable conductors to be terminated by the bottom row of contacts 32 can be routed by flexible ways and means to both sides, i.e. from the left or right in the orientation as shown, to the contacts 32. This is achieved due to the fact that the wire routing troughs 30 of the array of the module 34.2 extend to a side other than that of the wire routing troughs 30 of the other module 34.3. The lower side 20, having the two arrays of wire routing troughs 30, directly adjoins the next terminal block 10, at the upper side 18 of which another array of wire routing troughs 30 is provided. Consequently, by novel ways and means, unlike prior art, more arrays of wire guides, namely three, are now available than rows of contacts, namely two, at each terminal block 10 or 110. It is just as possible to provide another configuration between two adjoining terminal blocks featuring only a single row of contacts at the front side 12 with two arrays of wire guides between two rows of contacts. This enhances the flexibility in terminating the cable conductors to the sole existing row of contacts.

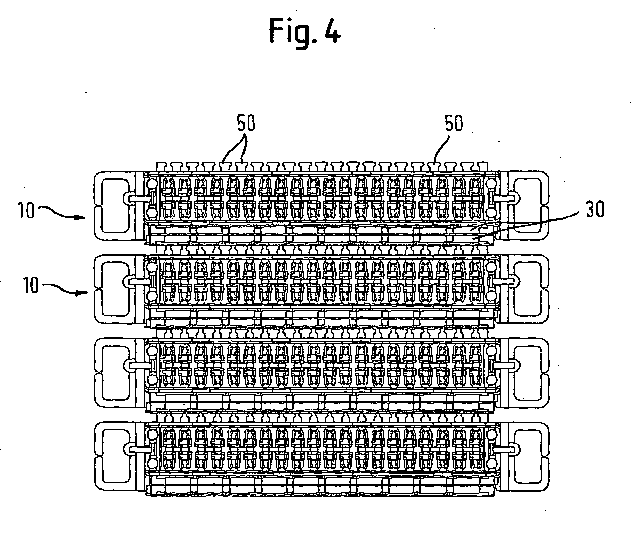

Referring now to Fig. 4, there is illustrated in a view similar to that as shown in Fig. 3, terminal blocks 210 in accordance with the invention juxtaposed or stacked. In this arrangement, two arrays of wire routing troughs 30 are provided at the lower side 20 as shown in Fig. 4, whereas at the upper side of each terminal block 210, wire guides in the form of several dual hooks 50 are provided. These hooks 50 have a substantially mushroom-shaped configuration and hook-shaped sections protruding from a web provided for attachment to the housing 254 of the terminal block 210. For the two-side outermost hooks of this embodiment the hook-shaped protruding element does not extend to the outer side at which there is no further wire to be routed. Instead, it extends only to the adjoining wire routing element. As evident from the contact surface area between two blocks 10, three arrays of wire guided are provided, namely two arrays of wire routing troughs 30 and one array of dual hooks 50. Since the terminal block comprises two rows of contacts it applies in the case of this embodiment too, that the number of arrays of wire guided is higher than the number of rows of contacts.

## Claims

1. A telecommunications terminal block (10, 110, 210) including:
- at least one contact module including a front side (12) and a rear side, an upper side (18) and a lower side (20), a first side (14) and a second side (16) opposite the first side (14), as well as at least one row of contacts (32) extending between the first side (14) and the second side (16) which are exposed at the front side (12), and
- at least two arrays each comprising at least two wire guides (30, 50) arranged at the upper side (18) and/or lower side (20) of the contact module which lead cable conductors terminated at the contact (32) from the front side (12) to the first side (14) or the second side (16), the wire guides (30, 50) of each array each leading to a single side (14, 16),
- whereby at least two of the arrays adjoin each other and at least one row of contacts and are assigned to said row of contacts, and
- whereby the wire guides (30) of the each such array lead to opposite sides.

2. The terminal block as set forth in claim 1, having wire guides that are closed wire routing troughs (30).

3. The terminal block as set forth in claims 1 or 2, having wire guides (50) that are substantially hook-shaped.

4. The terminal block as set forth in any of the preceding claims, further comprising a housing (54, 254), whereby each at least one contact module and its wire guides (30, 50) are integrated into the housing.

5. The terminal block as set forth in any of the preceding claims, having a first array of wire guides provided at the lower side (20) or the upper side (16), a second array of wire guides provided at the upper side (16) or the lower side (20) opposite the first array of wire guides and a third array of wire guides provided at the lower side (20) or the upper side (16), which lead to the same side as the wire guide of the array of wire guides located opposite the third array of wire guides.

6. The terminal block as set forth in claim 5, wherein all wire guides of that side, on which the third array of wire guides is provided, are closed wire routing troughs (30), and the wire guides (50) of the opposite side are substantially hooked-shaped.

7. The terminal block as set forth in any of claims 1 to 5, wherein the wire guides (30) of all arrays are closed wire routing troughs.

8. The terminal block as set forth in any of the preceding claims further comprising at least one splitter module.

9. A wire distributor, more particularly telecommunications main distributor, including at least one terminal block (10, 110, 210) as set forth in any of the preceding claims.

10. The wire distributor as set forth in claim 9, **characterized by** it including a plurality of terminal blocks (10, 110, 210) stacked or adjacent to each other, whereby between any two contact modules, there are provided more arrays of wire guides (30, 50) than there are rows of contacts within the contact modules.

## Patentansprüche

1. Telekommunikationsanschlussblock (10, 110, 210), mit Folgendem:
- mindestens einem Kontaktmodul, das eine Vorderseite (12) und eine Rückseite, eine Oberseite (18) und eine Unterseite (20), eine erste Seite (14) und eine zweite Seite (16) gegenüber der ersten Seite (14) sowie mindestens eine Reihe von Kontakten (32) enthält, die sich zwischen der ersten Seite (14) und der zweiten Seite (16) erstrecken und an der Vorderseite (12) freiliegen, und
- mindestens zwei Arrays, die jeweils mindestens zwei Drahtführungen (30, 50) umfassen, die an der Oberseite (18) und/oder der Unterseite (20) des Kontaktmoduls angeordnet sind und die an dem Kontakt (32) angeschlossene Kabeladern von der Vorderseite (12) zu der ersten Seite (14) oder der zweiten Seite (16) führen, wobei die Drahtführungen (30, 50) jedes Arrays jeweils zu einer einzigen Seite (14, 16) führen,
- wobei mindestens zwei der Arrays aneinander und an mindestens eine Kontaktreihe angrenzen und der Kontaktreihe zugeordnet sind, und
- wobei die Drahtführungen (30) des jeweiligen Arrays zu gegenüberliegenden Seiten führen.

2. Anschlussblock nach Anspruch 1, der Drahtführungen aufweist, die geschlossene Drahtführungskanäle (30) sind.

3. Anschlussblock nach Anspruch 1 oder 2, der Drahtführungen (50) aufweist, die im Wesentlichen hakenförmig sind.

4. Anschlussblock nach einem der vorhergehenden Ansprüche, der weiterhin ein Gehäuse (54, 254) aufweist, wobei jedes mindestens eine Kontaktmodul und seine Drahtführungen (30, 50) in das Gehäuse integriert sind.

5. Anschlussblock nach einem der vorhergehenden Ansprüche, der einen ersten Array von Drahtführungen, die an der Unterseite (20) oder Oberseite (18) vorgesehen sind, einen zweiten Array von Drahtführungen, die an der Oberseite (18) oder Unterseite (20) gegenüber dem ersten Array von Drahtführungen vorgesehen sind, und einen dritten Array von Drahtführungen, die an der Unterseite (20) oder Oberseite (18) vorgesehen sind und zu der gleichen Seite wie die Drahtführung des Arrays von Drahtführungen führen, die gegenüber dem dritten Array von Drahtführungen angeordnet sind, aufweist.

6. Anschlussblock nach Anspruch 5, wobei alle Drahtführungen der Seite, auf der der dritte Array von Drahtführungen vorgesehen ist, geschlossene Drahtführungskanäle (30) sind, und die Drahtführungen (50) der gegenüberliegenden Seite im Wesentlichen hakenförmig sind.

7. Anschlussblock nach einem der Ansprüche 1 bis 5, wobei die Drahtführungen (30) aller Arrays geschlossene Drahtführungskanäle sind.

8. Anschlussblock nach einem der vorhergehenden Ansprüche, der weiterhin mindestens ein Splittermodul umfasst.

9. Kabelverteiler, insbesondere Telekommunikationshauptverteiler, der mindestens einen Anschlussblock (10, 110, 210) nach einem der vorhergehenden Ansprüche enthält.

10. Kabelverteiler nach Anspruch 9, **dadurch gekennzeichnet, dass** er mehrere Anschlussblöcke (10, 110, 210) enthält, die gestapelt oder nebeneinander angeordnet sind, wobei zwischen beliebigen zwei Kontaktmodulen mehr Arrays von Drahtführungen (30, 50) vorgesehen sind als es Kontaktreihen in den Kontaktmodulen gibt.

## Revendications

1. Bornier (10, 110, 210) de télécommunications comprenant :
- au moins un module de contact comprenant une face avant (12) et une face arrière, une face supérieure (18) et une face inférieure (20), une première face (14) et une deuxième face (16) opposée à la première face (14), ainsi qu'au moins une rangée de contacts (32) s'étendant entre la première face (14) et la deuxième face (16), découverts au niveau de la face avant (12), et
- au moins deux matrices comportant chacune au moins deux guide-fils (30, 50) disposés au niveau de la face supérieure (18) et / ou de la face inférieure (20) du module de contact, qui mènent des conducteurs de câbles se terminant au niveau du contact (32) de la face avant (12) à la première face (14) ou à la deuxième face (16), les guide-fils (30, 50) de chaque matrice menant chacun à une seule face (14, 16),
- au moins deux des matrices étant contiguës entre elles et à au moins une rangée de contacts et étant affectées à ladite rangée de contacts, et
- les guide-fils (30) de chacune desdites matrices menant à des faces opposées.

2. Bornier selon la revendication 1, doté de guide-fils constitués de gouttières fermées (30) d'acheminement de fils.

3. Bornier selon les revendications 1 ou 2, doté de guide-fils (50) de forme sensiblement recourbée.

4. Bornier selon l'une quelconque des revendications précédentes, comportant en outre un boîtier (54, 254), le module ou chacun des modules de contact et ses guide-fils (30, 50) étant intégrés dans le boîtier.

5. Bornier selon l'une quelconque des revendications précédentes, doté d'une première matrice de guide-fils ménagée au niveau de la face inférieure (20) ou de la face supérieure (18), d'une deuxième matrice de guide-fils ménagée au niveau de la face supérieure (18) ou de la face inférieure (20) à l'opposé de la première matrice de guide-fils et une troisième matrice de guide-fils ménagée au niveau de la face inférieure (20) ou de la face supérieure (18), menant vers la même face que le guide-fil de la matrice de guide-fils située à l'opposé de la troisième matrice de guide-fils.

6. Bornier selon la revendication 5, tous les guide-fils de la face sur laquelle est ménagée la troisième matrice de guide-fils étant des gouttières fermées (30) d'acheminement de fils, et les guide-fils (50) de la face opposée étant de forme sensiblement recourbée.

7. Bornier selon l'une quelconque des revendications 1 à 5, les guide-fils (30) de toutes les matrices étant des gouttières fermées d'acheminement de fils.

8. Bornier selon l'une quelconque des revendications précédentes comportant en outre au moins un module séparateur.

9. Répartiteur de fils, plus particulièrement répartiteur principal pour télécommunications, comprenant au moins un bornier (10, 110, 210) selon l'une quelconque des revendications précédentes.

10. Répartiteur de fils selon la revendication 9, **caractérisé en ce qu'**il comprend une pluralité de borniers (10, 110, 210) superposés ou adjacents les uns aux autres, de telle sorte qu'entre deux modules de contact quelconques, on dispose de plus de matrices de guide-fils (30, 50) qu'il n'existe de rangées de contacts au sein des modules de contact.
